# EUROPEAN PATENT SPECIFICATION

(11) **EP 0 355 079 B1**
(45) Date of publication and mention of the grant of the patent: **24.02.1993**
(21) Application number: 89500084.2
(22) Date of filing: 14.08.1989
(51) Int. Cl.: B23H 7/26, B25B 5/14

(54) **Fastening implement**
Befestigungswerkzeug
Outil de fixation

(30) Priority: 17.08.1988 ES 8802551; 03.08.1989 ES 8902756
(43) Date of publication of application: 21.02.1990
(73) Proprietor: Caceres Serrano, Gregorio, E-08207 Sabadell (Barcelona) (ES); Roig Gilabert, Jorge, E-08015 Barcelona (ES)
(72) Inventor: Caceres Serrano, Gregorio, E-08207 Sabadell (Barcelona) (ES); Roig Gilabert, Jorge, E-08015 Barcelona (ES)
(74) Representative: Ponti Grau, Ignasi

(56) References cited:
- DE-U- 8 630 804
- FR-A- 514 448
- US-A- 3 474 215

## Description

The present invention relates to a fastening appliance specially applicable to the fixation tools, work pieces, electrodes and the like in machining operations, and, more specifically, to the fastening of such pieces in wire electroerosive machines.

### BACKGROUND OF THE INVENTION

Fastening appliances comprising a body including two angled planes (hereafter called "anvil" for convenience) on which the work piece or tool to be fastened is made to rest under the action of removable fastening means, and a support for the said anvil, serving to fasten it onto a machine table, head, etc., are well known.

It is customary in such fastening appliances to secure the work piece or tool to the anvil by means of generally flat clamps, such that the contact zone between clamp and piece is reduced and the fastening incorrect, and thereby the position of the work piece or tool cannot be warranted during the machining operation.

According to another known embodiment, the fastening means consist of a member in the shape of a portion of a ring which is removably secured to the anvil and has tapped drill holes for engagement of fastening screws. Because the tapped drill holes are fixed as regards the ring, their directions are fixed and the fastening means cannot suitably adapt itself to the several geometric shapes of the work pieces resting on the two anvil planes, as the screws do not act in the direction suitable for warranting a stable and safe position of the work piece. Thus, this device permits only to fasten regular pieces, such as round, square or other pieces, and requires the use of several bolts to attain the fastening which, on the other hand, becomes slow and inaccurate.

Document FR-A- 514448 refers to fastening appliance comprising a body including two angled planes on which an object such as a workpiece or a tool to be fastened is made to rest under the action of removable fastening means, and a support for said anvil, the removable fastening means for securing the workpiece, tool or electrode to the angled rest planes of the anvil comprising a frame shaped clamp with a portion of its contour which is adaptable to the anvil and a tapped drill hole opposite to said portion, and a threaded spindle engaged in said tapped hole with one end directed towards the adaptable portion of the clamp.

This device allows the spindle to take different angular positions depending on the number of grooves but similarly to the embodiments disclosed above the fastening becomes difficult and inaccurate.

### DESCRIPTION OF THE INVENTION

With the fastening appliance of the invention, the mentioned drawbacks are solved by providing a fast, stable and safe fastening of the work piece, tool, electrode or the like to be secured.

The fastening appliance subject of the invention comprises a removable fastening means for securing the work piece or tool to the angled rest planes of the anvil. It comprises further a frame shaped clamp with a portion of its contour which is adaptable to the anvil and a tapped drill hole opposite to the said portion, and a threaded spindle engaged in the said thread with one end directed towards the adaptable portion of the clamp being provided with a fastening head formed with two angled planes, articulated to the spindle by means of a ball-and-socket joint.

In this mode it is possible to fasten on the anvil angled rest planes, work pieces, tools or electrodes of whatever geometric shape, while exerting a high force with no risk of doing harm to the surface of the said pieces.

According to a further development of the invention, the anvil comprises at least a peripheral groove into which a protrusion of the inside of the clamp adaptable portion of the means for securing the piece or tool, is housed.

The clamp becomes thus fixed in the axial direction to the anvil, though allowing a relative rotation of the clamp respect to the anvil with the purpose of arranging the spindle in the most suitable direction.

To advantage, the anvil comprises as well, at its end which is to be mounted on the anvil support, a recess departing from the angled rest planes to permit fitting on the said rest planes pieces having lateral protrusions such as fins, flanges or the like.

On the other hand, the adaptable portion of the fastening clamp comprises at least a screw to secure it to the anvil at a given relative position.

According to an embodiment intended to mount the fastening appliance on a table or the like, the anvil support comprises a flat surface on which one end of the said anvil rests and is secured, two flat surfaces aligned with the two angled rest planes, and means for fastening it on the table.

According to another embodiment intended to mount the fastening appliance on a head or the like, the anvil support comprises an outer and an inner mutually concentric and revolving sleeves provided with adjustable rotation means and adjustable radial displacement means, the outer sleeve being adapted for engagement to the head, and the inner sleeve being adapted for engagement to the anvil, the appliance comprising as well a central fastening device joining the two sleeves with one another through a spring tending to hold them aligned.

With this support, the work piece or tool located on the anvil rest planes can be arranged in the suitable position through its displacement in rotation and inclination as regards the head geometric axis.

To advantage, the adjustable rotation means comprise a radial arm secured to the inner sleeve and a pair of screws arranged according to a chord on the outer sleeve at both sides of the said arm, the one screw pushing the arm to revolve to the right and the other pushing the arm to revolve to the left. Also to advantage, the adjustable rotation screws comprise respective balls fitted at their ends contacting with the arm, and the end of this latter has an inclined surface at its contact zone with the respective balls, both inclined surfaces being mutually divergent outwards to increase the path of the arm.

According to another feature of the invention, the adjustable radial displacement means comprise a gap formed between the outer sleeve inner face and the inner sleeve outer face, and a plurality of screws arranged radial on the outer sleeve, each said screws being provided with flat springs and a ball for contact with the inner sleeve, to allow radial displacement of the inner sleeve as regards the outer sleeve.

The so far described embodiment of support for the anvil carrying the two angled rest planes, according to the invention, is well suited for mounting the appliance on the table of plunge electroerosive machines, though the invention includes also a development of this support making it especially suitable for mounting on the table of wire electroerosive machines.

Thus, according to another feature of the invention, the anvil support for fastening the appliance on the table of the machine comprises a lower member and an upper member arranged the one over the other, the lower member having means for securing it to the machine table or bench, while the upper member is movable respect to the lower member over a ball crown maintaining a common rotation center and has adjustable angular rotation means over a plane parallel to the table, means for regulating its position as regards the same about the main axis (x,y,z) defining the table plane in the fastening zone and means for fixing to it the anvil including the two angled rest planes, both members being held together by means of a third securing central member through a spring tending to hold them aligned under a given previous tensile load.

The support of the invention thus allows individually regulating each of the movements while holding stable the other.

Thus, for example, the angular rotation can be regulated while preserving the position as regards the table or bench plane, or to modify the position as regards the said plane while holding stable the position as regards the angular rotation.

According to a further development of this support, the adjustable angular rotation means over a plane parallel to the table or bench, comprise a radial arm fast with the lower member, and a pair of screws disposed in the upper member at right angles to the said arm, such that one screw pushes the arm for a right hand rotation and the other for a left hand rotation.

Preferably, the means for regulating the position of the upper member as regards the table or bench about the main axis (x,y,z) defining the table plane at the fastening zone, comprise a plurality of screws arranged in the upper member and provided at their lower ends with a ball resting onto the lower member surface. In the particular case of using four screws, each pair of screws holds fast the movement as regards one axis while allowing the movement as regards the other.

Preferably, the contact surface of the lower member with the balls is formed on a hard alloy ring having a plurality of facets associated with the screws, in order to secure the position of the axis.

To advantage, the means for regulating the position of the upper member respect to the table or bench about the main axis (x,y,z) defining the plane of the same at the fastening zone comprise, between each ball and the hard alloy ring, a stub on which a respective ball impinges, the said stubs performing the thrust of the screws onto the sleeve. Each stub moves over a respective flat surface of the ring.

The anvil with the two angled rest planes comprises a circumferential recess housing a cap fixed to it and defining with this latter a groove for receiving the frame clamp, the cap being provided with a plurality of fastening mechanisms consisting of ball, stub and spring, to provide for the displacement of the clamp in the groove and the stable position of this clamp at whatever point of the groove.

To advantage, the anvil is partially hollow, such that the rest planes have a small flexibility permitting to compensate for irregularities of the part, in the order of 5 µm.

### BRIEF DESCRIPTION OF THE DRAWINGS

For a better understanding of the above exposition, the enclosed drawings show a practical case of embodiment as a diagrammatic and non restrictive example. In the said drawings:
Figure 1 is a perspective exploded view of the fastening appliance of the invention as mounted on a support for fastening onto a table or the like;
Figure 2 is an upper plan view of the same appliance of Figure 1 securing a work piece;
Figure 3 is a detail of the end of the fastening means spindle;
Figure 4 is a part sectioned elevation view of the support to be secured to a head or the like;
Figure 5 is a detail in plan view cross section of the means for rotating the support of Figure 4:
Figure 6 is a plan view of the appliance of the invention securing a rectangular cross section work piece;
Figure 7 is a plan view of parts of the appliance of the invention securing a circular cross section work piece;
Figure 8 is an enlarged detail of Figure 4;
Figure 9 is an elevation longitudinal section of the appliance according to the invention with a support arrangement for use in wire electroerosive machines;
Figure 10 is an upper plan view of the appliance of Figure 9, and
Figure 11 is a detail of the the support at the frame clamp fastening zone.

### DESCRIPTION OF PREFERRED EMBODIMENTS

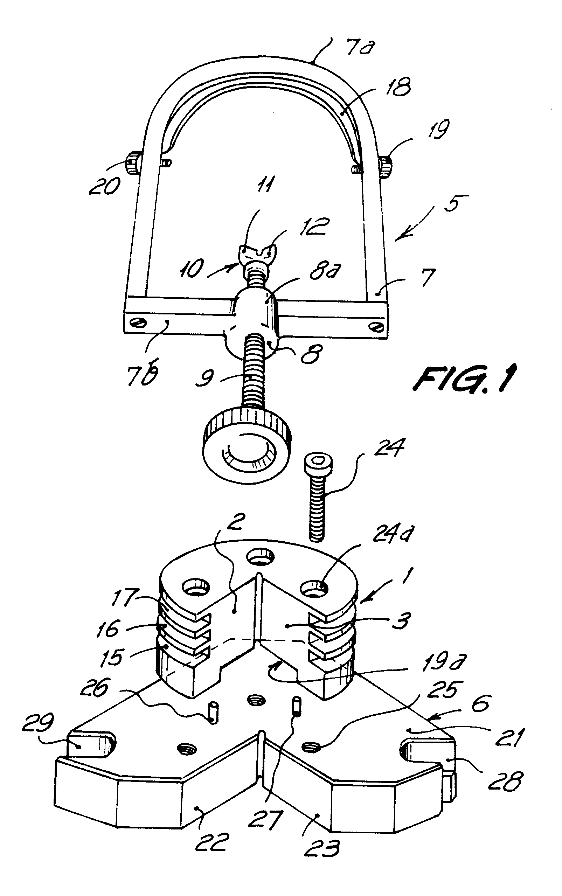

As shown in Figures 1 and 2, the fastening appliance of the invention comprises a anvil 1 with two rest planes 2,3 disposed at an angle, thus forming a rest for a work piece, tool, electrode or thew like 4 to be secured thereon by removable fastening means generally referred to as 5, and a support 6 for the anvil 1 and serving to secure it onto a table or the like (not shown).

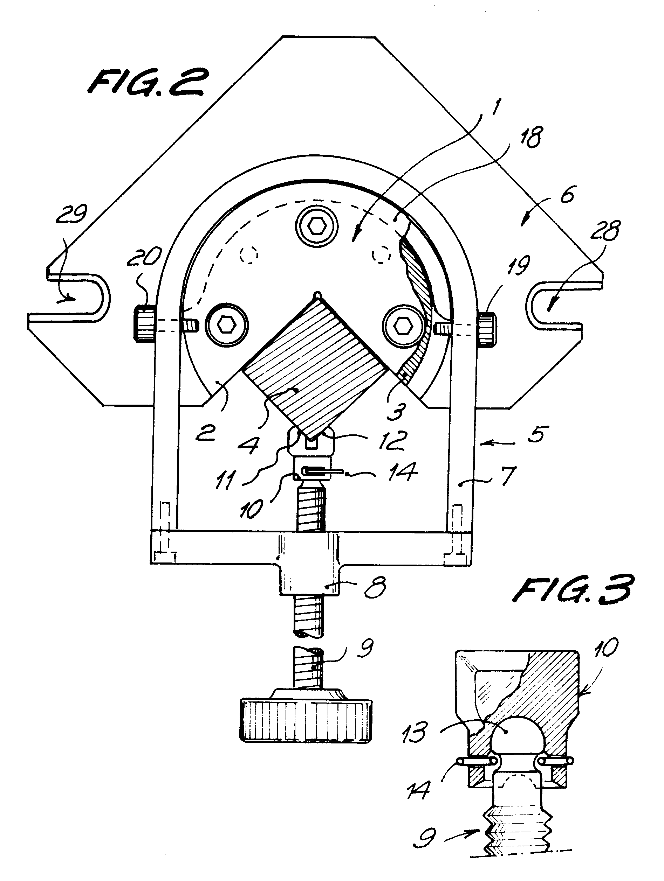

The removable fastening means 5 for securing the work piece or tool 4 on the rest planes 2,3 of the anvil 1, comprise an elongated frame shaped clamp 7 having a rounded end 7a which is adaptable about the anvil 1 and a cross bar like end 7b opposite to the rounded end. This cross bar end 7b has an enlarged central portion 8a provided with a tapped hole 8 such that a threaded spindle 9, engaged for rotation in this tapped hole 8, has an inner end directed towards the rounded end 7a of the frame clamp 7 and has articulated a jaw member or head 10 defining two angled planes 11,12. This articulation is performed by means of a ball-and-socket joint shown in detail in Figure 3 and comprising a hemispheric head 13 formed at the end of the spindle 9 and housed in a complementary cavity of the jaw member 10, where it is held by a retaining clip 14.

In the use position of the frame clamp 7, the two angled planes 11,12 of the head 13 become faced to the angled planes 2,2 of the anvil 1, such that a work piuece or tool 4 can be secured between both pairs of angled planes.

The anvil 1 is of a generally cylindric shape in its lateral surface, except for the zone where the two angled rest planes 2,3 are formed, to conform with the inner outline of the rounded end 7a of clamp 7, and comprises in this cylindric surface three peripheral grooves 15,16,17 regularly spaced along the central axis of the anvil 1. The inner surface of the rounded end 7a of clamp 7 has a protrusion in the shape of an inwards extending fin 18 having dimensions suitable to loosely fit in one of the grooves 15,16,17 of the anvil 1.

Thus, the frame clamp 7 can be fixed in the axial direction on the anvil 1, though allowing a relative rotation of the clamp 7 about the anvil 1, to arrange the spindle 9 in the most convenient direction to fasten the work piece, tool, electrode or the like 4, such as it is visible in Figure 2.

As it is shown in Figure 1, the anvil 1 comprises also a recess 19 in its end face intended to engage the support 6, in order to allow some pieces having lateral protrusions such as fins, flanges or the like, to rest on the angled rest planes 2,3.

The frame clamp 7 comprises also a pair of set screws 19,20 within the arcuate region of the rounded end 7a, to secure it to the anvil 1 in a given relative position.

The support 6, appearing in Figures 1, 2 and 6, is suitable for fastening appliances intended to secure work pieces, tools, electrodes or the like on a table or the like, and comprises a flat surface 21 on which the lower end of the anvil 1, formed with the recess 19a, rests and is secured by means of bolts 24 passing through axial holes 24a of the anvil to engage tapped holes 25 of the support; centering of the anvil 1 on the support 6 is performed by means of centering pins 26,27 fitting in suitable drill holes of both parts. The edge of the support 6 has two flat surfaces 22,23 mutually angled to conform with the angled rest planes 2,3 of the anvil, to give room for work pieces or tools protruding downwards of the anvil 1, and two side notches 28,29 to secure the support 6, and thus the ensemble of the fastening appliance, to the machine table or the like.

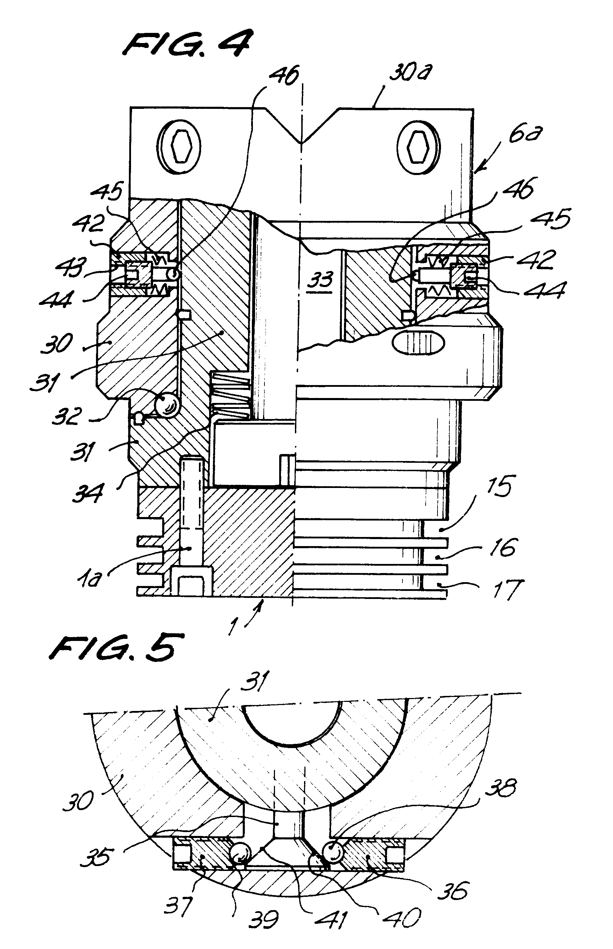

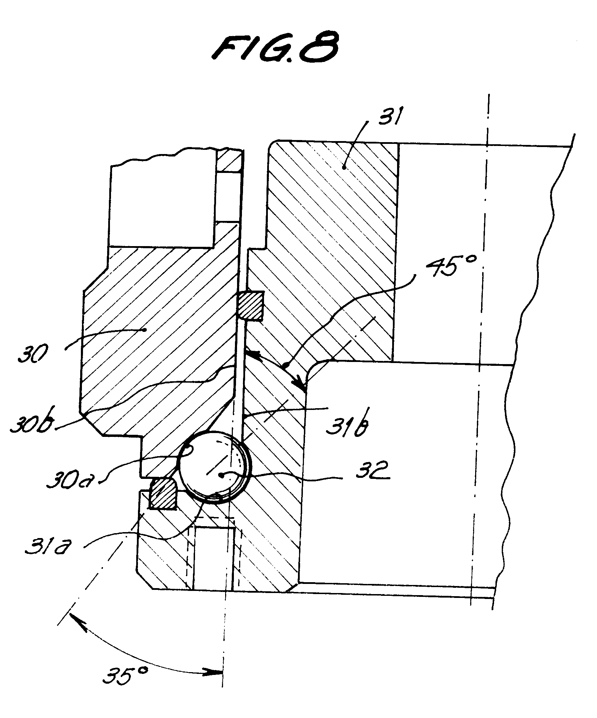

The support shown in Figure 4 and denoted with the general reference 6a, is applicable to the fastening of work pieces or tools 4 on a head or the like (not shown), and comprises an outer sleeve 30, the upper end 30a of which has conventional means for its fastening to a work head of a machine or the like, and an inner sleeve 31 at the lower end of which an anvil 1, as described above, can be secured by means of bolts such as 1a. The two sleeves 30,31 are mutually concentric and revolving with an angular, axial movement of the sleeve 31 as regards the sleeve 30 by means of balls 32. The ensemble is provided with adjustable rotation means shown in detail in Figures 5 and 8, and radial adjustable displacement means.

The balls 32 constitute a rolling crown and are located between the housings 30a of the sleeve 30 and 31a of the sleeve 31 (Fig. 8), with the feature that the housing 30a is located on a cone frustum surface the generatrix of which forms an angle of 35° as regards the inner face 30b of the sleeve 30, while the housing 21a is located on a cone frustum surface whose generatrix forms an angle of 45° as regards the outer face 31b of the sleeve 31. The whole to permit a slight oscillation and correction of the sleeve 31 as regards the sleeve 30 by acting on the points to be described closer later on.

The support 6a comprises as well a fixing central part 33 joining the two sleeves 30,31 with one another thorough a spring 34 tending to hold them aligned.

As shown in Figure 5, the adjustable rotation means comprise a radial arm 35 integral with the inner sleeve 31 and a pair of screws 36,37 arranged according to a chord in the outer sleeve 30 at both sides of the arm 35, such that one screw pushes the arm to rotate it to the right, and the other for a rotation to the left.

The inner ends of the screws 36,37 have fitted respective balls 38,39, and the end of the arm 35 has, at the contact zone with the balls 38,39, an inclined surface at each side, in a diverging direction to increase the path of the arm 35.

The adjustable radial displacement means comprise a plurality of tapped sleeves 42 (Figure 4, preferably four, at 90°), radial embedded in the outer sleeve 30, with an internal thread 43 which is engaged by the head of a screw 44 against which elastic washers 45 come to rest. A cavity is formed at the point of these screws, for respective balls 46 impinging onto the surface of the sleeve 31.

As it can be seen, there is a gap at the contact zone between both sleeves 30,31 to permit a radial displacement of the inner sleeve 31 as regards the outer sleeve 30.

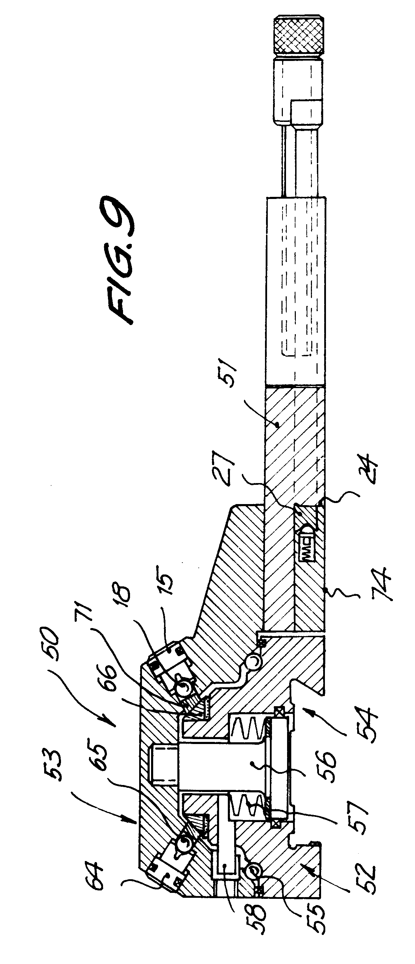

The above description corresponds to an specific embodiment of the invention which can be used, for example, for securing work pieces, tools, electrodes or the like in plunge electroerosive machines. Now, with reference to the Figures 9 to 11 an embodiment will be described comprising a support structure suitable for use in wire electroerosive machines. Some parts of these Figures are equivalent to corresponding parts of Figures 1 to 9 and are given the same reference numerals for convenience.

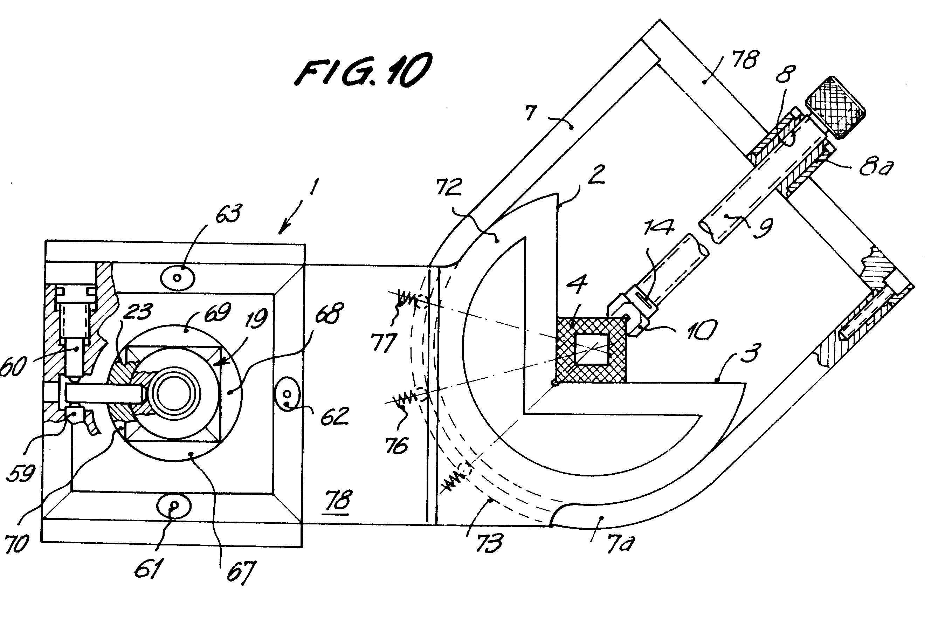

As shown in the Figures 9 and 10, the support 50 for the anvil 51 including the two angled rest planes 2,3 comprises a lower member 52 and an upper member 53 arranged the one over the other, of which the lower member 52 is secured to the table or bench of the machine by means of a prismatic guide 54, and the upper member 53 is movable respect to the lower member 52 over a crown of balls 55 such that both member are mutually concentric.

The upper member 53 is provided with angular rotation means adjustable over a plane which is parallel to the machine table, and means for regulating its position as regards the said table about the main axis (x,y,z) defining the table plane at the fastening zone.

As it issues from the Figure 9, the lower member 52 can be engaged onto the bench, and the upper member 53 can be fitted to the anvil 51. The support 50 comprises as well a third fastening central member 56 joining the two lower 52 and upper 53 members through a spring 57 tending to hold them aligned under a given previous tensile load.

The angular rotation means, which are adjustable over a plane parallel to the table, comprise a radial arm 58 integral with the lower member 52, and a pair of screws 59,60 arranged in the upper member 53 at right angles to the said arm 58. As it can be seen, the screw 59 pushes the arm for a rotation to the right, and the screw 60 pushes the said arm for a rotation to the left.

The means for regulating the position of the upper member respect to the table, about the main axis (x,y,z) defining the table plane at the fastening zone, comprise four screws 61,62,63,64 arranged in the upper member 53 and provided with a ball 65 at their lower end. These balls 65 rest onto the surface of the lower member 52.

The contact surface of the lower member 52 with the ball 65 is formed on a hard alloy ring 66 showing four flat surfaces 67,68,69,70 associated with the four screws 61,62,63,64 to secure the position of the axis.

The means for regulating the position of the upper member 53 respect to the table about the main axis (x,y,z) comprise, between each ball 65 and the ring 66, a stub 71 upon which either ball 65 rests. These stubs 71 perform the thrust of the screws 61,62,63,64 on the ring 66.

The anvil 72 including the two angled rest planes 2,3 comprises a circumferential recess 73 housing a cap 74 fast to the anvil 72. The cap 74 defines together with the anvil 72, a groove 75 for housing the frame clamp 7.

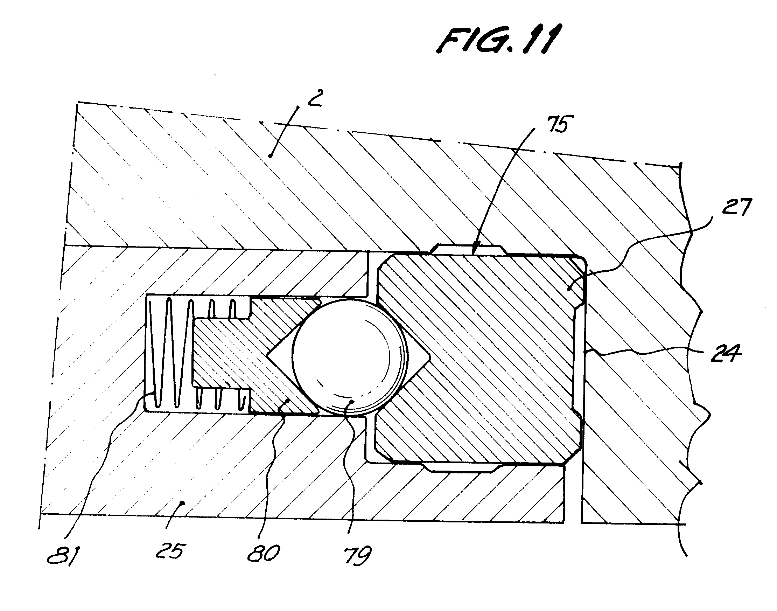

Furthermore, the cap 74 is provided with fastening devices 76,77,78 (Fig. 10) constituted of a ball 79, stub 80 and spring 81 (Fig. 11) to permit the displacement of the frame clamp 7 along the groove 75 and its stable location at any point of the said groove.

As shown in Figure 10, the anvil 72 is in part hollow, so that the rest planes have a slight flexibility providing for the adaptation to irregularities of the work piece 4.

The operation of the appliance according to the invention issues from the above exposition:
According to Figures 1 to 8, the work piece or tool 4 is placed onto the planes 2,3 and the frame clamp 7 is located at one of the grooves 15,16,17. When the frame clamp 7 is fitted in the groove, it can be rotated until the spindle 9 comes to the suitable position, and this position is made stable by means of the screws 19,20. Then the spidle 9 is driven in until the two angled planes 11,12 of the fastening jaw or head 10 contact the work piece 4 in two points opposite the points on which this latter abuts the anvil angled planes 2,3, and thereafter the clamp is fastened by strongly driving in the spindle 9.

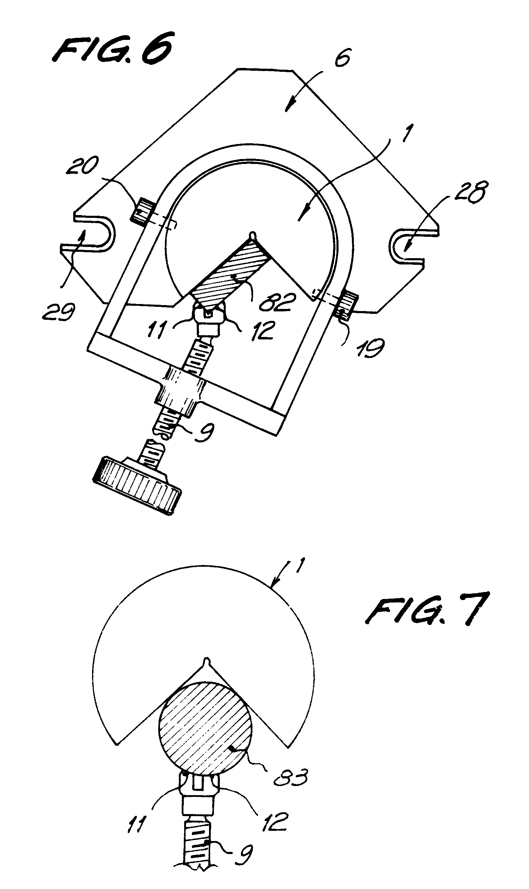

In this manner, it is possible to fasten work or tools 4 of whatever geometric shape. Figures 6 and 7 show two different pieces, the one of a rectangular cross section 82 and the other of a circular cross section 83.

With the device of the invention a strong force cab be applied with no risk of doing harm to the surface of the piece, as the contact with this latter is performed by means of the angled rest planes 11,12.

When the piece is fastened by the appliance according to the invention, its position can be modified by means of the support engaged to a head, shown in Figures 4 and 5. With this support, a controlled rotation and inclination can be performed thanks to the double movement of the sleeve 31 as regards the sleeve 30. On the one hand a rotation movement which is controlled and regulated by the screws 36,37 through the balls 38,39 pressing onto the inclined surfaces 40,41 of the arm 35 (Fig. 5). On the other hand, the sleeve 31 can be regulated according to an axial, oscillation, ball-and-socket movement, to attain that the piece to be fastened comes to be parallel to the appliance, the screws 44 being available to stabilize with a great accuracy the desired position as they are thread engaged in the embedded sleeves 42, while the elastic washers 45 absorb any shock that the piece 30 may receive. Furthermore, the gap between the sleeves 30,31, as well as the different angles of the planes having the housings 30a,331a for the balls 32 (Fig. 4 and 8), are fundamental to attain the position movement and regulation of the sleeve 31, in order to attain the parallelism of the piece to be machined.

The fastening appliance according to the invention has the following advantages:
It performs fastening over four flat faces: the two faces of the anvil and the two faces of the jaw at the end of the spindle.
It attains a greater fastening force over the work piece for a given applied thrust.
It provides a precise and easy location for repeating work pieces. By merely slacking the spindle and tightening it again, the work piece is located.
It permits to fasten pieces with whatever geometric shape. This is possible thanks to the four contact faces surrounding the piece with an ample contact surface.
It is capable of fastening greater pieces for similar appliance dimensions.
The push stress is better distributed over the piece.
The piece does not become marked because the stress is distributed over flat surfaces.

## Claims

1. Fastening appliance, of the kind comprising a body (1,72) serving as an anvil including two angled planes (2,3) on which an object such as a workpiece or a tool, (4,82,83) to be fastened is made to rest under the action of removable fastening means, and a support (6;6a;50) for the said anvil, the removable fastening means for securing the workpiece, tool or electrode (4;82;83) to the angled rest planes (2,3) of the anvil (1;72) comprising a frame shaped clamp (7) with a portion (7a) of its contour which is adaptable to the anvil (1;72) and a tapped drill hole (8) opposite to said portion, and a threaded spindle (9) engaged in said tapped hole with one end directed towards the adaptable portion (7a) of the clamp (7) characterised in that the removable fastening means comprises a fastening head (10) formed with two angled planes (11,12), articulated to the spindle (9) by means of a ball-and-socket joint (13,14).

2. Fastening appliance, according to claim 1, characterized in that the anvil (1;72) comprises at least a peripheral groove (15-17) housing a protrusion (18) of the inside of the adaptable portion (7a) of the clamp (7), of the means for securing an object such as a piece or a tool (4).

3. Fastening appliance, according to claim 1, characterized in that the anvil (1) comprises as well, at its end which is to be mounted on the anvil support (6), a recess (19) departing from the angled rest planes (2,3) to permit fitting on the said rest planes pieces having protrusions such as fins or flanges.

4. Fastening appliance, according to claim 1, characterized in that the adaptable portion (7a) of the fastening clamp (7) comprises at least a screw (19,20) to secure it to the anvil (1) at a given relative position.

5. Fastening appliance, according to claim 1, adapted to be mounted on a table, characterized in that the support (6) of the anvil (1) comprises a flat surface on which one end of the said anvil (1) rests and is secured, two flat surfaces (22,23) aligned with the two angled rest planes (2,3), and means for fastening it on the table.

6. Fastening appliance, according to claim 1, adapted to be mounted to a working head, characterized in that the support (6a) of the anvil (1) comprises an outer sleeve (30) and an inner sleeve (31) mutually concentric and revolving, provided with adjustable rotation means (35-41) and adjustable radial displacement means (42-46), the outer sleeve (30) being adapted for engagement to the head, and the inner sleeve (31) being adapted for engagement to the anvil (1), the appliance comprising as well a central fastening device (33-34) joining the two sleeves (30,31) with one another through a spring (34) tending to hold them aligned.

7. Fastening appliance, according to claim 6, characterized in that the adjustable rotation means (35-41) comprise a radial arm (35) secured to the inner sleeve (31) and a pair of screws (36,37) arranged according to a chord on the outer sleeve (31) at both sides of the said arm (35), the one screw (36) pushing the arm to revolve to the right and the other screw (37) pushing the arm to revolve to the left.

8. Fastening appliance, according to claim 7, characterized in that the adjustable rotation screws (36,37) comprise respective balls (38,39) fitted at their ends contacting with the arm (35), and the end of this latter has an inclined surface (40,41) at its contact zone with the respective balls (38,39), both inclined surfaces (40,41) being mutually divergent outwards to increase the path of the arm.

9. Fastening appliance, according to claim 6, characterized in that the adjustable radial displacement means (42,46) comprise a gap formed between the inner face of the outer sleeve (30) and the outer face of the inner sleeve (31), and a plurality of screws (44) arranged radial on the outer sleeve (30), each said screws being provided with flat springs (45) and a ball (46) for contact with the inner sleeve (31), to allow radial displacement of this latter as regards the outer sleeve (30).

10. Fastening appliance, according to claim 1, adapted to be mounted on a table of wire electroerosive machines, characterized in that the support (50) for the anvil (72) comprises a lower member (52) and an upper member (53) arranged the one over the other, the lower member (52) having means (54) for securing it to the machine table or bench, while the upper member (53) is movable respect to the lower member (52) over a ball crown (55) maintaining a common rotation center, and has adjustable angular rotation means (58-60) over a plane parallel to the table, means (61-65) for regulating its position as regards the same about the main axis (x,y,z) defining the table plane in the fastening zone and means for fixing to it the anvil (72) including the two angled rest planes (2,3), both members (52,53) being held together by means of a third securing central member (56) through a spring (57) tending to hold them aligned under a given previous tensile load.

11. Fastening appliance, according to claim 10, characterized in that the adjustable angular rotation means (58-60) over a plane parallel to the table or bench, comprise a radial arm (58) fast with the lower member (52), and a pair of screws (59,60) disposed in the upper member (53) at right angles to the said arm (58), such that one screw (59) pushes the arm for a right hand rotation and the other screw (60) for a left hand rotation.

12. Fastening appliance, according to claim 10, characterized in that the means (61-65) for regulating the position of the upper member (53) as regards the table or bench about the main axis (x,y,z) defining the table plane at the fastening zone, comprise a plurality of screws (61-64) arranged in the upper member (53) and provided at their lower ends with a ball (65) resting onto the surface of the lower member (52).

13. Fastening appliance, according to claim 12, characterized in that the means (61-65) for regulating the position of the upper member (53) as regards the table or bench about the main axis (x,y,z) defining the table plane at the fastening zone, comprise four screws (61-64), each pair of screws (61,63:62,64) holding fast the movement as regards one axis while allowing the movement as regards the other.

14. Fastening appliance, according to claim 12, characterized in that the contact surface of the lower member (52) with the balls (65) is formed on a hard alloy ring (66) having a plurality of facets (67-79) associated with the screws (61-64), in order to secure the position of the axis (x,y,z).

15. Fastening appliance, according to claim 14, characterized in that the means for regulating the position of the upper member (53) respect to the table or bench about the main axis (x,y,z) defining the plane of the same at the fastening zone comprise, between each ball (65) and the hard alloy ring (66), a stub (71) on which a respective ball (65) impinges, the said stubs (71) performing the thrust of the screws onto the sleeve.

16. Fastening appliance, according to claim 10, characterized in that the anvil (72) comprises a circumferential recess (73) housing a cap (74) fixed to it and defining with this latter a groove for receiving the frame clamp (7,7a), the cap (74) being provided with a plurality of fastening mechanisms (76,77,78) consisting of ball, stub and spring, to provide for the displacement of the clamp (7,7a) in the groove and the stable position of this clamp at whatever point of the groove.

17. Fastening appliance, according to claim 10, characterized in that the anvil (72) is partially hollow, such that the angled rest planes (2,3) have a small flexibility permitting to compensate for irregularities of the work piece or tool.

## Patentansprüche

1. Befestigungsvorrichtung, mit einem als Amboß dienenden Körper (1,72), der zwei im Winkel zueinander stehende Flächen (2,3) enthält, an denen ein zu befestigender Gegenstand, wie ein Werkstück oder Werkzeug, (4,82,83) unter Einwirkung von lösbaren Befestigungsmitteln veranlaßt wird aufzuliegen, und mit einer Halterung (6;6a;50) für den Amboß, wobei die lösbaren Befestigungsmittel, um das Werkstück, Werkzeug oder die Elektrode (4;82;83) an die im Winkel zueinander stehenden Außenflächen (2,3) des Ambosses (1;72) zu arretieren, aus einer rahmenförmigen Klemme (7) mit einem Abschnitt (7a) ihres Umrisses, der an den Amboß (1;72) anpaßbar ist und einer Gewindebohrung (8) gegenüber diesem Bereich und einer Gewindespindel (9) bestehen, die mit einem Ende in Richtung des anpaßbaren Bereiches (7a) der Klemme (7) in die Gewindebohrung eingreift, **dadurch gekennzeichnet,** daß die lösbaren Befestigungsmittel einen mit zwei im Winkel zueinander stehenden Flächen (11,12) gebildeten Befestigungskopf (10) aufweisen, der an die Spindel (9) mittels einer Kugelgelenkverbindung (13, 14) angelenkt ist.

2. Befestigungsvorrichtung nach Anspruch 1, **dadurch gekennzeichnet,** daß der Amboß (1;72) mindestens eine periphere Aushöhlung (15-17) enthält, die eine Vorwölbung (18) am Inneren des anpaßbaren Abschnittes (7a) der Klemme (7) der Mittel zum Arretieren eines Gegenstandes, wie ein Stück oder Werkzeug (7), unterbringt..

3. Befestigungsvorrichtung nach Anspruch 1, **dadurch gekennzeichnet,** daß der Amboß (1) auch an seinem an die Amboßhalterung (6) zu montierendem Ende eine Ausnehmung (19) enthält, die von den im Winkel zueinander stehenden Flächen (2,3) ausgeht, um eine Anpassung auf die Teile der Auflageflächen zu erlauben, die Aushöhlungen wie Fugen oder Flansche aufweisen.

4. Befestigungsvorrichtung nach Anspruch 1, **dadurch gekennzeichnet,** daß der anpaßbare Abschnitt (7a) der Befestigungsklemme (7) mindestens eine Schraube (19,20) enthält, um ihn an den Amboß (1) bei einer vorgegebenen relativen Position zu befestigen.

5. Befestigungsvorrichtung nach Anspruch 1 zum Montieren auf einen Tisch, **dadurch gekennzeichnet,** daß die Halterung (6) des Ambosses (1) eine ebene Oberfläche, auf der ein Ende des Ambosses (1) aufliegt und befestigt wird, zwei ebene Flächen (22,23), die zu den zwei im Winkel zueinander stehenden Auflageflächen (2,3) ausgerichtet sind, und Mittel enthält, um ihn auf dem Tisch zu befestigen.

6. Befestigungsvorrichtung nach Anspruch 1 zum Montieren auf einen Arbeitskopf, **dadurch gekennzeichnet,** daß die Halterung (6a) des Ambosses (1) eine äußere Muffe (30) und eine innere Muffe (31) enthält, die gegeneinander konzentrisch sind und sich drehen, welche mit einstellbaren Drehmitteln (35-41) und einstellbaren radialen Verstellmitteln (42-46) versehen ist, wobei die äußere Muffe (30) zum Eingriff an den Kopf angepaßt und die innere Muffe (31) zum Eingriff an den Amboß (1) angepaßt ist, und die Vorrichtung auch ein zentrale Befestigungseinrichtung (33-34) aufweist, die die zwei Muffen (30,31) miteinander über eine Feder (34), die dazu dient, um diese ausgerichtet zu halten, verbindet.

7. Befestigungsvorrichtung nach Anspruch 6, **dadurch gekennzeichnet,** daß die einstellbaren Drehmittel (35-41) einen radialen Arm (35), der an der inneren Muffe (31) befestigt ist und ein Paar Schrauben (36,37) enthalten, die einer Sehne an der äußere Muffe (30) folgend an beiden Seiten des Arms (35) angeordnet sind, wobei die eine Schraube (36) den Arm antreibt, sich nach rechts zu drehen und die andere Schraube (37) den Arm antreibt, sich nach links zu drehen.

8. Befestigungsvorrichtung nach Anspruch 7, **dadurch gekennzeichnet,** daß die einstellbaren Schrauben (36,37) zum Drehen jeweilig Kugeln (38,39) enthalten, die an ihren Enden den Arm (35) berührend befestigt sind, und das Ende dieses Letzteren an seinem Berührungsbereich mit der jeweiligen Kugel (38,39) eine schräge Oberfläche (40,41) aufweist, wobei beide schrägen Oberflächen (40,41) nach außen gegenseitig auseinanderlaufen, um den Weg des Armes zu verlängern.

9. Befestigungsvorrichtung nach Anspruch 6, **dadurch gekennzeichnet,** daß die einstellbaren radialen Verstellmittel (42,46) einen zwischen der Innenseite der äußeren Muffe (30) und der Außenseite der inneren Muffe (31) gebildeten Spalt und eine Vielzahl von Schrauben (44), die radial an der äußeren Muffe (30) angeordnet sind, enthält, wobei jede der Schrauben mit einer Blattfeder (45) und einer Kugel (46) zur Berührung der inneren Muffe (31) versehen ist, um ein radiales Verstellen der Letzteren, was die äußere Muffe (30) betrifft, zu erlauben.

10. Befestigungsvorrichtung nach Anspruch 1 zum Montieren an einen Tisch von drahtelktroerosiven Maschinen, **dadurch gekennzeichnet,** daß die Halterung (50) für den Amboß (72) eine unteres Teil (52) und ein oberes Teil (53) enthält, wobei das eine über dem anderen angeordnet ist und das untere Teil (52) Mittel (54) aufweist, um es an den Maschinentisch oder die Maschinenbank zu befestigen, während das obere Teil (53) in Bezug auf das untere Teil (52) über einen Kugelkopf (55) ein gemeinsames Drehzentrum beibehaltend bewegbar ist und einstellbare Mittel (58-60) zur winkelförmigen Drehung um eine Ebene parallel zum Tisch, Mittel (61-65), um dessen Position, was den Gleichen um die Hauptachse (x, y, z), die die Tischebene im Befestigungsbereich definiert, betrifft einzustellen und Mittel aufweist, um an ihn den die zwei im Winkel zueinander stehenden Auflagenflächen (2, 3) enthaltenen Amboß (72) zu befestigen, wobei beide Teile (52,53) durch Mittel eines dritten zentralen Befestigungsteiles (56) über eine Feder (57), die darauf gerichtet ist, diese unter einer vorgegebenen Zugbeanspruchung ausgerichtet zu halten, zusammengehalten werden.

11. Befestigungsvorrichtung nach Anspruch 10, **dadurch gekennzeichnet,** daß die einstellbaren Mittel (58-60) zum winkelförmigen Drehen um eine Ebene parallel zum Tisch oder der Bank einen mit dem unteren Teil (52) befestigten radialen Arm (58) und ein Paar Schrauben (59,60) enthalten, die im oberen Teil (53) in rechten Winkeln am Arm (58) so angeordnet sind, daß die eine Schraube (59) den Arm für eine rechtsseitige Drehung und die andere Schraube (60) für eine linksseitige Drehung anschiebt.

12. Befestigungsvorrichtung nach Anspruch 10, **dadurch gekennzeichnet,** daß die Mittel (61-65) zum Einstellen der Position des oberen Teils (53), was den Tisch oder die Bank um die Hauptachse (x,y,z) betrifft, die die Tischeebene im Befestigungsbereich bestimmt, eine Vielzahl von Schrauben (61-64) enthalten, die im oberen Teil (53) angeordnet und an ihren unteren Enden mit einer Kugel (65), die auf der Oberfläche des unteren Teils (52) aufliegt, versehen sind.

13. Befestigungsvorrichtung nach Anspruch 12, **dadurch gekennzeichnet,** daß die Mittel (61-65) zum Einstellen der Position des oberen Teils (53), was den Tisch oder die Bank um die Hauptachse (x,y,z) betrifft, die die Tischeebene im Befestigungsbereich definiert, vier Schrauben (61-64) enthalten, wobei jedes Paar Schrauben (61,63;62,64) die Bewegung, was eine Achse betrifft, festhält, während die Bewegung, was die andere Achse betrifft, erlaubt ist.

14. Befestigungsvorrichtung nach Anspruch 12, **dadurch gekennzeichnet,** daß die Kontaktfläche des unteren Teils (52) mit der Kugel (65) aus einem Hartlegierungsring (66) mit einer Vielzahl von Anschrägungen (67-79), die den Schrauben (61-64) zugeordnet sind, gebildet ist, um die Position der Achse (x,y,z) zu arretieren.

15. Befestigungsvorrichtung nach Anspruch 14, **dadurch gekennzeichnet,** daß die Mittel (61-65) zum Einstellen der Position des oberen Teils (53), bezüglich dem Tisch oder der Bank um die Hauptachse (x,y,z), die die Tischeebene im Befestigungsbereich definiert, zwischen jeder Kugel (65) und dem Hartlegierungsring (66) einen Stutzen (71) enthalten, an dem die jeweilige Kugel (65) anstößt, wobei die Stutzen (71) den Druck der Schrauben auf die Muffen ausüben.

16. Befestigungsvorrichtng nach Anspruch 10, **dadurch gekennzeichnet,** daß der Amboß (72) eine umlaufende Ausnehmung (73) enthält, die einen daran befestigten Einsatz (74) aufnimmt und die mit diesem Letzteren eine Aushöhlung definiert, um den Klemmrahmen (7,7a) aufzunehmen, wobei der Einsatz (74) mit einer Vielzahl von Befestigungsmechanismen (76,77,78), bestehend aus einer Kugel, Stutzen und Feder, versehen ist, um für das Verstellen der Klemme (7,7a) in der Ausnehmung und die stabilie Lage dieser Klemme an einem beliebigen Punkt der Ausnehmung zu sorgen.

17. Befestigungsvorrichtung nach Anspruch 10, **dadurch gekennzeichnet,** daß der Amboß (72) teilweise hohl ist, so daß die im Winkel zueinander stehenden Flächen (2,3) eine leichte Elastizität aufweisen, die es erlaubt, Ungleichförmigkeiten des Werkstückes oder Werkzeuges auszugleichen.

## Revendications

1. Dispositif de fixation comprenant un, corps (1, 72) servant d'enclume, qui comprend deux plans (2, 3) formant un angle entre eux, sur lesquels un objet à fixer tel qu'une pièce ou un outil (4; 82, 83) est appuyé sous l'action de moyens de fixation amovibles, et un support (6; 3a; 50) pour ladite enclume, les moyens de fixation amovibles destinés à fixer la pièce, l'outil ou l'électrode (4; 82; 83) aux plans d'appui (2, 3) de l'enclume (1; 72) qui forment un angle entre eux, comprenant un collier (7) en forme de cadre dont une portion (7a) du contour est adaptable à l'enclume (1; 72) et qui présente un trou taraudé (8) à l'opposé de ladite portion, et une tige filetée (9) vissée dans ledit trou taraudé avec une de ses extrémités dirigée vers la portion adaptable (7a) du collier (7), caractérisé en ce que les moyens de fixation amovibles comprennent une tête de fixation (10) présentant deux plans (11, 12) formant un angle entre eux, et qui est articulée sur la tige filetée (9) au moyen d'un joint (13, 14) à rotule.

2. Dispositif de fixation selon la revendication 1, caractérisé en ce que l'enclume (1; 72) présente au moins une gorge périphérique (15-17) renfermant un bossage (18) faisant saillie sur la face intérieure de la portion (7a) adaptable du collier (7), des moyens servant à fixer un objet tel qu'une pièce ou un outil (4).

3. Dispositif de fixation selon la revendication 1, caractérisé en ce que l'enclume (1) présente en outre, à son extrémité qui doit être montée sur le support (6) de l'enclume, un évidement (19) qui prend naissance aux plans (2, 3) d'appui formant un angle entre eux pour permettre de monter sur lesdits plans d'appui des pièces présentant des saillies telles que des ailettes ou nervures.

4. Dispositif de fixation selon la revendication 1, caractérisé en ce que la portion (7a) adaptable du collier (7) de fixation comprend au moins une vis (19, 20) servant à la fixer à l'enclume (1) dans une position donnée.

5. Dispositif de fixation selon la revendication 1, adapté pour être monté sur une table, caractérisé en ce que le support (6) de l'enclume (1) comprend une surface plate sur laquelle une extrémité de ladite enclume (1) repose et est fixée, deux surfaces (22, 23) plates alignées par rapport aux deux plans d'appui (2, 3) qui forment un angle entre eux, et des moyens servant à le fixer sur la table.

6. Dispositif de fixation selon la revendication 1, adapté pour être monté sur une tête de travail, caractérisé en ce que le support (6a) de l'enclume (1) comprend une douille extérieure (30) et une douille intérieure (31) concentrique et tournant l'une par rapport à l'autre, munies de moyens (35-41) de rotation réglables, et de moyens (42-46) de déplacement radial réglables, la douille (30) extérieure étant adaptée pour être mise en prise avec la tête, et la douille (31) intérieure étant adaptée pour être mise en prise avec l'enclume (1) le dispositif comprenant aussi un dispositif (33, 34) de fixation central réunissant les deux douilles (30, 31) l'une à l'autre par l'intermédiaire d'un ressort (34) qui tend à les maintenir alignées.

7. Dispositif de fixation selon la revendication 6, caractérisé en ce que les moyens (35-41) de rotation réglable comprennent un bras (35) réglable fixé à la douille (31) intérieure, et une paire de vis (36, 37) disposées selon une corde sur la douille (31) extérieure, des deux côtés dudit bras (35), une vis (36) poussant le bras pour le faire tourner vers la droite et l'autre vis (37) poussant le bras pour le faire tourner vers la gauche.

8. Dispositif de fixation selon la revendication 7, caractérisé en ce que les vis (36, 37) de rotation réglables comprennent des billes (38, 39) respectives montées à leurs extrémités qui sont en contact avec le bras (35) et l'extrémité de ce dernier présente une surface (40, 41) inclinée dans sa zone de contact avec chacune des billes (38, 39) respectives, les deux surfaces (40, 41) inclinées divergeant vers l'extérieur l'une par rapport à l'autre pour agrandir le trajet du bras.

9. Dispositif de fixation selon la revendication 6, caractérisé en ce que les moyens (42, 46) de déplacement radial réglable comprennent un espace libre formé entre la face intérieure de la douille (30) extérieure et la face extérieure de la douille (31) intérieure, et une pluralité de vis (44) disposées radialement sur la douille (30) extérieure, chacune desdites vis étant munies de ressorts (45) plats et d'une bille (46) pour entrer en contact avec la douille (31) intérieure, pour permettre un déplacement radial de cette dernière par rapport à la douille (30) extérieure.

10. Dispositif de fixation selon la revendication 1, adapté pour être monté sur une table de machine d'électro-érosion de fils, caractérisé en ce que le support (50) supportant l'enclume (72) comprend un élément (52) inférieur et un élément (53) supérieur disposés l'un au-dessus de l'autre, l'élément (52) inférieur possédant des moyens (54) servant à le fixer à la table ou au banc de la machine, tandis que l'élément (53) supérieur peut se déplacer par rapport à l'élément (52) inférieur sur une couronne (55) de billes en conservant un centre de rotation commun, et possède des moyens (58-60) de rotation angulaire réglables au-dessus d'un plan parallèle à la table, des moyens (61-65) servant à régler sa position en ce qui concerne ces moyens par rapport à l'axe (x, y, z) principal définissant le plan de la table dans la zone de fixation, et des moyens servant à y fixer l'enclume (72) qui comprend les deux plans (2, 3) d'appui formant un angle entre eux, les deux éléments (52, 53) étant maintenus assemblés à l'aide d'un troisième élément (56) central de blocage par l'intermédiaire d'un ressort (57) qui tend à les maintenir alignés sous une contrainte de traction préalable donnée.

11. Dispositif de fixation selon la revendication 10, caractérisé en ce que les moyens (58-60) de rotation angulaire réglable sur un plan parallèle à la table ou au banc, comprennent un bras (58) radial solidaire de l'élément (52) inférieur et une paire de vis (59, 60) disposées dans l'élément (53) supérieur, perpendiculairement audit bras (58), de sorte qu'une vis (59) pousse le bras pour le faire tourner vers la droite et que l'autre vis (60) le pousse pour le faire tourner vers la gauche.

12. Dispositif de fixation selon la revendication 10, caractérisé en ce que les moyens (61-65) servant à régler la position de l'élément (53) supérieur par rapport à la table ou au banc autour de l'axe (x, y, z) principal définissant le plan de la table dans la zone de fixation, comprennent une pluralité de vis (61-64) agencées dans l'élément (53) supérieur et munies à leur extrémité inférieur d'une bille (65) qui repose sur la surface de l'élément (52) intérieur.

13. Dispositif de fixation selon la revendication 12, caractérisé en ce que les moyens (61-65) servant à régler la position de l'élément (63) supérieur par rapport à la table ou au banc, autour de l'axe (x, y, z) principal définissant le plan de la table dans la zone de fixation comprennent quatre vis (61-64), chaque paire de vis (61, 63; 62, 64) bloquant rigidement le mouvement par rapport à un axe tout en permettant le mouvement par rapport à l'autre axe.

14. Dispositif de fixation selon la revendication 12, caractérisé en ce que la surface de contact de l'élément (52) inférieur avec les billes (65) est formée sur une bague (66) en alliage dur présentant une pluralité de facettes (67-79) qui sont associées aux vis (61-64) pour fixer la position de l'axe (x, y, z).

15. Dispositif de fixation selon la revendication 14, caractérisé en ce que les moyens servant à régler la position de l'élément (53) supérieur par rapport à la table ou au banc autour de l'axe (x, y, z) principal qui définit le plan de cette table ou de ce banc dans la zone de fixation comprennent, entre chaque bille (65) et la bague (66) en alliage dur, un téton (71) sur lequel est appuyée une bille (85) respective, lesdits tétons (71) exécutant la poussée des vis sur la douille.

16. Dispositif de fixation selon la revendication 10, caractérisé en ce que l'enclume (72) comprend un évidement (73) circonférentiel, recevant un chapeau (74) qui y est fixé, et définissant avec ce dernier une gorge pour recevoir le collier (7, 7a) formant cadre, le chapeau (74) étant muni d'une pluralité de mécanismes (76, 77, 78) de fixation constitués par une bille, un téton et un ressort, pour permettre le déplacement du collier (7, 7a) dans la gorge et assurer la stabilité de la position de ce collier en n'importe quel point quelconque de la gorge.

17. Dispositif de fixation selon la revendication 10, caractérisé en ce que l'enclume (72) est partiellement creuse, de sorte que les plans (2, 3) d'appui formant un angle entre eux ont une petite flexibilité qui permet la compensation des irrégularités de la pièce ou de l'outil.
